# EUROPÄISCHE PATENTSCHRIFT

(11) **EP 0 843 707 B1**
(45) Veröffentlichungstag und Bekanntmachung des Hinweises auf die Patenterteilung: **16.10.2002**
(21) Anmeldenummer: 96927626.0
(22) Anmeldetag: 29.07.1996
(51) Int. Cl.: C09D 183/04

(54) **BESCHICHTUNGSMISCHUNGEN, EIN VERFAHREN ZU IHRER HERSTELLUNG UND IHRE VERWENDUNG FÜR BESCHICHTUNGEN**
COTAING MIXTURES, METHOD OF PRODUCING THEM AND THEIR USE FOR COATING PURPOSES
MELANGES DE RECOUVREMENT, PROCEDE DE PRODUCTION ET UTILISATION A DES FINS DE REVETEMENT

(30) Priorität: 08.08.1995 DE 19529093; 24.10.1995 DE 19539446
(43) Veröffentlichungstag der Anmeldung: 27.05.1998
(73) Patentinhaber: GE Bayer Silicones GmbH & Co. KG, 40699 Erkrath (DE); Weilburger Lackfabrik J. Grebe GmbH, 35781 Weilburg (DE)
(72) Erfinder: HERBER, Jürgen, D-35394 Gie en (DE); MAZANEK, Jan, D-51061 Köln (DE); KÄSLER, Karl-Heinz, D-51467 Bergisch Gladbach (DE); WAGNER, Gebhard, D-51519 Odenthal (DE)
(86) Internationale Anmeldenummer: EP9603337
(87) Internationale Veröffentlichungsnummer: WO97006220

(56) Entgegenhaltungen:
- EP-A- 0 672 736
- EP-A- 0 687 657
- DE-A- 4 235 323
- DATABASE WPI Derwent Publications Ltd., London, GB; AN 92-052100 XP002018847 & JP,A,03 294 382 (CEMEDINE KK.) , 25.Dezember 1991
- DATABASE WPI Derwent Publications Ltd., London, GB; AN 82-45663E XP002018848 & SU,A,854 912 (ENAMEL CHEM. EQUIP.) , 15.August 1981
- DATABASE WPI Derwent Publications Ltd., London, GB; AN 79-38184B XP002018849 & JP,A,54 046 145 (MATSUSHITA ELEC. IND. KK.) , 11.April 1979

## Beschreibung

Die vorliegende Erfindung betrifft Beschichtungsmischungen, enthaltend im wasserfreien Zustand mindestens ein Polysiloxan, mindestens einen reaktiven anorganischen Füllstoff, mindestens ein als Schmelze filmbildendes anorganisches Material und mindestens ein reaktionsfähiges (Oligo)silan, ein Verfahren zur Herstellung sowie deren Verwendung.

Bislang ist eine Vielzahl von Mischungen aus mindestens einem Polysiloxan und mindestens einem anorganischen Füllstoff bekannt, die in den unterschiedlichsten Bereichen eingesetzt werden. Mischungen, bestehend aus einem Polysiloxanharz als Polysiloxan und einem Pigment als Füllstoff, sog. pigmentierte Polysiloxanharze, finden sowohl als Lacksysteme als auch in der Beschichtungstechnik Anwendung. Als wärmebeständige Beschichtungen kamen bislang sowohl pigmentierte Polysiloxanharze in organischen Lösemitteln als auch anorganische Beschichtungen aus Email zum Einsatz. Pigmentierte Polysiloxanharze weisen jedoch nur ein gutes Eigenschaftsprofil auf, wenn diese in organischen Lösemitteln eingesetzt werden. Anorganische Beschichtungen aus Email zeichnen sich durch eine hohe Wärmebeständigkeit aus. Nachteilig hingegen ist, daß sie spröde sind und erst durch Einbrennen bei Temperaturen von >400°C ihre Endeigenschaften erreichen. Daher sind diese insbesondere in der Transportphase und bis zum Erreichen der notwendigen Temperatur leicht zu beschädigen, so daß Email als Beschichtung in vielen Bereichen nicht eingesetzt werden kann.

Hochtemperaturbeständige Systeme lassen sich bisher nur bei ausschließlicher Verwendung von lösemittelhaltigen Silikonharzen erzielen, gegebenenfalls unter Zusatz von Silikonölen als Verlaufs- oder Trennmittel. Entsprechende Beschichtungen sind zusammengesetzt aus dem Harz als Bindemittel, Pigmenten, Additiven (Katalysatoren, Emulgatoren, Verlaufsmittel usw.) und verschiedenen Lösemitteln. Die derzeitigen wäßrigen Systeme weisen Nachteile, insbesondere in bezug auf ihr Verhalten nach der Raumtemperaturtrocknung, auf. Mangelnder Korrosionsschutz, zu geringe Härte und Filmfestigkeit (Bindefestigkeit), zu lange Trocknungszeiten (Slurries) und eine zu geringe Lagerstabilität sind weitere Nachteile.

Wärmebeständige Beschichtungen finden vor allem Einsatz beim Schutz von Gegenständen und Anlagen der unterschiedlichsten Art, wie beispielsweise Schalldämpfern, Öfen, Anlagen der petrochemischen Industrie, Gehäuse für Geräte, Verbrennungsanlagen usw..

An wärmebeständige Beschichtungen werden z.B. folgende Anforderungen gestellt, wie Temperaturbeständigkeit bis 600°C bei Dauer- und Wechselbeanspruchung, hohe Beständigkeit bei Temperaturdifferenzen (ΔT-Beständigkeit), hohe Biegefestigkeit, Farbtonbeständigkeit, Beständigkeit gegen korrosive Einflüsse, gute Trocknungseigenschaften, gute Haftung, einfaches Herstellverfahren (hohe Lagerstabilität) und gute Handhabbarkeit und Einsetzbarkeit in den üblichen Verfahren, wie Spritzen, Walzen, Tauchen oder Streichen.

Die Herstellung eines hochtemperaturbeständigen Korrosionsschutzüberzuges erfolgt z.B. durch Trocknung bei Raumtemperatur und späteres Einbrennen.

In bisher bekannten Mischungen für wärmebeständige Beschichtungen konnte weder auf den Einsatz eines organischen Lösemittels verzichtet, noch ein entsprechend optimiertes Email, noch eine optimale Kombination von Polysiloxan und Email bereitgestellt werden.

Aufgabe der vorliegenden Erfindung war daher die Bereitstellung stabiler, lösemittelarmer, möglichst organische-Lösemittel-freier Beschichtungsmischungen auf Polysiloxan-Basis, die insbesondere als wärmebeständige Beschichtungen einsetzbar sind und die sich durch ein verbessertes Eigenschaftsprofil gegenüber dem Stand der Technik auszeichnen.

Es wurde nun gefunden, daß Beschichtungsmischungen, enthaltend im wasserfreien Zustand
A) mindestens ein Polysiloxan,
B) mindestens einen reaktiven anorganischen Füllstoff,
C) mindestens ein als Schmelze filmbildendes anorganisches Material sowie
D) gegebenenfalls Pigmente und/oder unreaktive Füllstoffen und
E) mindestens ein reaktionsfähiges (Oligo)silan,
F) gegebenenfalls Katalysatoren und
G) weitere Füllstoffe,
in bestimmten Anteilen, überragende Eigenschaften gegenüber dem Stand der Technik aufweisen.

Gegenstand der vorliegenden Erfindung sind somit Beschichtungsmischungen, enthaltend im wasserfreien Zustand
A) 20 bis 40 Gew.-%, bevorzugt 20 bis 35 Gew.-%, besonders bevorzugt 20 bis 30 Gew.% mindestens eines hydroxy- und/oder alkoxy-funktionellen Polysiloxanharzes, welches mit Wasser oder anderen lösungsmitteln in Gemisch mit Wasser eine Emulsion ausbildet,
B) 2 bis 30 Gew.%, bevorzugt 2 bis 20 Gew.-%, besonders bevorzugt 2 bis 15 Gew.-%, ganz besonders bevorzugt 2 bis 10 Gew.-% bzw. 5 bis 10 Gew.-% mindestens eines reaktiven anorganischen Füllstoffs,
C) 5 bis 50 Gew.-%, bevorzugt 20 bis 40 Gew.-%, bevorzugt 20 bis 35 Gew.-%, ganz besonders bevorzugt 20 bis 30 Gew.-% mindestens eines als Schmelze filmbildenden anorganischen Materials sowie gegebenenfalls
D) 0 bis 40 Gew.-%, bevorzugt 1 bis 30 Gew.-%, besonders bevorzugt 3 bis 20 Gew.-% eines unreaktiven Füllstoffes und/oder Pigments oder eines Gemisches aus mehreren Füllstoffen und/oder Pigmenten
E) 0,1 bis 10 Gew.-%, bevorzugt 0,5 bis 5 Gew.-%, besonders bevorzugt 1 bis 3 Gew.-% mindestens eines reaktionsfähigen (Oligo)silans aus der Gruppe der Aminogruppen-, Epoxy- und/oder Hydroxylgruppen enthaltenden Silane oder deren (Teil)hydrolysate
F) 0 bis 1 Gew.-%, bevorzugt 0,01 bis 0,5 Gew.-%, besonders bevorzugt 0,01 bis 0,3 Gew.-% mindestens eines Katalysators sowie
G) 0 bis 5 Gew.-%, bevorzugt 0,1 bis 3 Gew.-% eines weiteren Zusatzstoffes oder eines Gemisches aus mehreren Zusatzstoffen,
wobei die Summe der Komponenten A) bis G) 100 % beträgt.

In den erfindungsgemäßen Beschichtungsmischungen beträgt der Gehalt an D) vorzugsweise mindestens 1 Gew.-% an F), vorzugsweise mindestens 0,05 Gew.-%.

In den erfindungsgemäßen Beschichtungsmischungen ist Komponente A) mindestens ein hydroxy- und/oder alkoxyfunktionelles Polysiloxan, welches mit Wasser oder anderen Lösemitteln im Gemisch mit Wasser Emulsionen ausbildet. Polysiloxane im Sinne der Erfindung sind beispielsweise Copolymere aus Polysiloxan und Polyester, Polyether und/oder Polyepoxid (bzw. deren Gemische), ebenso wie lineare oder verzweigte Organopolysiloxane. Als Komponente A) wird vorzugsweise ein Polysiloxanharz oder ein Gemisch aus mehreren Polysiloxanharzen eingesetzt, wie sie in EP-A 512 418, S. 3, Zeilen 14-52, beschrieben sind. Besonders bevorzugt sind Polysiloxanharze, die einen Anteil von 10 - 80, bevorzugt 20 - 70, besonders bevorzugt 35 - 60 Gew.-%, an difunktionellen Bausteinen der allgemeinen Formel, 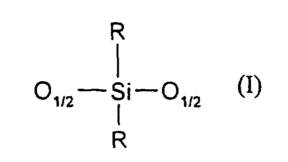 aufweisen, wobei
- R: einen beliebigen organischen Rest mit Si-C-Verknüpfung bezeichnet.

Besonders bevorzugt sind ebenfalls Kombinationen von verzweigten und linearen Polysiloxanen.

Bevorzugt wird die Komponente A) als wäßrige Emulsion eingesetzt. Der Einsatz von A) in einem organischen Lösemittel ist ebenfalls möglich, er hat lediglich ökologische Nachteile.

Die Komponente A) kann jedoch ebenso als Mischung mehrerer wäßriger Emulsionen vorliegen. Wird die Komponente A) in Form einer wäßrigen Emulsion eingesetzt, so liegt der Siloxangehalt zwischen 5 und 80 Gew.-%, bevorzugt zwischen 10 und 70 Gew.-%, besonders bevorzugt zwischen 20 und 60 Gew.-%. Komponente A) kann jedoch neben Wasser gegebenenfalls noch weitere Lösemittel enthalten. In diesem Fall sollte vorzugsweise mindestens ein Emulgator und/oder ein rheologisches Additiv, z.B. ein Verdickungsmittel, zugesetzt werden. Als Emulgatoren sind sowohl kationische als auch anionische Emulgatoren einsetzbar. Die in Form einer Emulsion vorliegende Komponente A) kann Emulgatoren, Verdickungsmittel und auch andere Hilfsstoffe in Mengen von 0,5 - 15 Gew.-%, bevorzugt 1 - 6 Gew.-%, besonders bevorzugt 1,5 - 5 Gew.-%, enthalten.

Als weiteres Zusatzmittel kann Komponente A) 0 - 5 Gew.-%, bevorzugt 0 - 2 Gew.-%, besonders bevorzugt 0 - 1 Gew.-% eines Bakterizids oder Fungizids enthalten. Die Komponente A) kann sowohl aus reinen Polysiloxanen und/oder Ölen bestehen als auch in Form entsprechender Emulsionen in Wasser sowie im Gemisch mit Wasser und weiteren Lösungsmitteln vorliegen. Zudem kann die Komponente A) zusätzlich Katalysatoren enthalten. Der Gehalt an Katalysatoren kann bis zu 1 Gew.-%, bezogen auf die Komponente A), betragen, wobei übliche Kondensationskatalysatoren, wie beispielsweise Organozinnverbindungen, Organotitanverbindungen und Organoaluminiumverbindungen einsetzbar sind.

In den erfindungsgemäßen Beschichtungsmischungen umfaßt die Komponente B) alle reaktiven anorganischen oder mit organischen Resten modifizierte anorganische Verbindungen, die reaktive Gruppen enthalten und die mit sich selbst und/oder anderen Komponenten der erfindungsgemäßen Mischungen reagieren können. Einige Beispiele für Komponente B) sind Kieselsole, Alkali-Wassergläser, Kieselsäureester, Organosilikonate, wie z.B. Natriummethylsilikonat, Titansäureester, Aluminate, Zirkonaluminate, Aluminiumhydroxid und organisch modifizierte Füllstoffe jeder Art, die reaktive Gruppen im obengenannten Sinne enthalten, wie z.B. Epoxy-, Amino- oder ungesättigte Gruppen enthaltende Füllstoffe, wie z.B. Quarz, Glas, Talkum, Kreide. Der Begriff Füllstoffe schließt auch Stoffe ein, die nach der erfindungsgemäßen Reaktion als feste Verbindungen bzw. Reaktionsprodukte vorliegen. So können als Edukte z.B. flüssige Titansäureester fungieren, die in die Beschichtungen eingebaut werden.

In den erfindungsgemäßen Beschichtungsmischungen ist der reaktive anorganische Füllstoff B) vorzugsweise kolloidale Kieselsäure in Form eines Kieselsols, Alkali-Wassergläserin wäßriger Lösung oder in fester Form, Alkylsilikonat, Aluminiumhydroxid oder ein Gemisch aus diesen Verbindungen. Als Alkylsilikonat ist Natrium- oder Kaliummethylsilikonat besonders bevorzugt. Die kolloidale Kieselsäure hat dabei vorzugsweise einen Gehalt von von 5 - 60 Gew.-% SiO₂, bevorzugt 10 - 40 Gew.-%, SiO₂, besonders bevorzugt 15 - 35 Gew.-% SiO₂. In einer bevorzugten Ausführungsform der vorliegenden Erfindung ist B) ein kolloidales Kieselsol mit einem Feststoffgehalt von 5 bis 60 Gew.-% und/oder ein Alkali-Wasserglas des Natriums, Kaliums oder Lithiums mit einem Molverhältnis von Me₂O:SiO₂>1:2, mit Me = Na, K oder Li Ein reaktiver anorganischer Füllstoff im Sinne der Erfindung ist ebenfalls pyrogene Kieselsäure in Pulverform sowie kolloidale Kieselsäure in Form von Kieselsolen. Die Kieselsolteilchen können auch nach den bekannten Verfahren oberflächenmodifiziert sein. Ebenfalls bevorzugt wird als Komponente B) gegebenenfalls modifiziertes Kieselsol eingesetzt, wie es in den DE-B 2 408 896, US-A 2 892 797, US-A 2 574 902, US-A 2 457 971, USA 2 668 149 und US-A 2 650 200 beschrieben ist. Besonders bevorzugt sind Kieselsole mit einer Partikelgröße von 5 - 100 Nanometer, ganz besonders bevorzugt 10 - 30 Nanometer.

In den erfindungsgemäßen Beschichtungsmischungen kann die Komponente C) jedes anorganische, in der Schmelze filmbildenden Material sein. Das als Schmelze filmbildende Material (C) ist vorzugsweise ein Email und/oder ein niedrigschmelzendes Glas.

Als Email C) im Sinne der Erfindung sind folgende spezielle Zusammensetzungen (in Gew.-%) besonders bevorzugt:

| Verbindung | Anteil in Gew.-% | |
|---|---|---|
| SiO₂ | 25 - 45 | |
| TiO₂ | 10 - 27 | |
| ZrO₂ | 0 - 10 | |
| P₂O₅ | 0 - 7 | |
| V₂O₅ | 0 - 15 | |
| B₂O₃ | 0 - 15 | |
| Al₂O₃ | 0 - 5 | |
| R₂O | 20 - 38 | mit R₂O = Na₂O 10-20, K₂O 2-15, Li₂O 0-8 |
| RO | 0 - 14 | mit RO = CaO 0-8, MgO 0-10, BaO 0-10, ZnO 0-8 |
| F⁻ | 0-4 | |

Diese können bis zu 10 % mit Farboxiden (Fe₂O₃, CoO, CuO) und bis zu 10 % an schmelzwirksamen Substanzen wie SnO, Bi₂O₃ und MoO₃ versetzt werden.

Das niedrigschmelzende Glas und/oder Email im Sinne der Erfindung sollte einen Erweichungspunkt unterhalb von 600°C, bevorzugt <550°C, besonders bevorzugt <440°C aber nicht unterhalb von 200°C, bevorzugt nicht unterhalb von 300°C und besonders bevorzugt nicht unterhalb von 350°C, aufweisen. Der Wärmeausdehnungskoeffizient des niedrigschmelzenden Glases und/oder Emails sollte demjenigen des metallischen Substrats angepaßt sein, so daß es beim Aufheizen nicht zum Abplatzen der Beschichtungen kommt. Der thermische Ausdehnungskoeffizient des niedrigschmelzenden Glases und/oder Emails sollte mindestens 380 x 10⁻⁷/K, bevozugt > 400 x 10⁻⁷/K, betragen (gemessen kubisch, zwischen 20°C und 400°C), wobei ein Ausdehnungskoeffizient größer 550 x 10⁻⁷/K weniger bevorzugt ist. Bei der Herstellung, Verarbeitung und auch dem Gebrauch des Glases und/oder Emails ist der Einsatz niedrigschmelzender physiologisch bedenklicher oder toxischer Elemente, wie beispielsweise Blei, Cadmium, weniger bevorzugt. Zur Herstellung der erfindungsgemäßen Emails und/oder Gläser werden handelsübliche Emailrohstoffe, wie z.B. Borax (Na₂B₄O₇ x 5H₂O), Quarzmehl, Natriumpolyphosphat, Feldspat, Zirkonsand, Flußspat, Alkali und Erdalkalicarbonaten, Titandioxid, Vanadiumpentoxid sowie evtl. Farboxiden (Fe₂O₃, MnO, CoO, CuO usw.) bei Temperaturen von 1 100 bis 1 260°C geschmolzen und über wassergekühlten Walzen abgeschreckt. Die so entstandenen Flakes werden dann entweder trocknen oder unter Verwendung verschiedener Mühlenzusätze naß vermahlen und weiterverarbeitet. Gegebenenfalls können beim Trockenmahlen Mahlhilfsmittel wie Glykole, Siliconöle oder dergleichen zugesetzt werden.

Komponente D) im Sinne der Erfindung ist z.B ein Pigment, Eisenoxid und/oder ein Glimmer. Besonders bevorzugt ist als Komponente D) ein Pigment oder Füllstoff in Form eines anorganischen, organischen und/oder metallischen Stoffes oder deren Gemische, wie z.B. Aluminiumoxid, Magnesium- und Caiciumphosphate und/oder -carbonate, -carbide, Nitride, Magnesiumoxid, Aluminiumhydroxid, Titandioxid, Siliciumcarbid, Zinkoxid, Aluminiumbronze, Zinn- und Zinkstaub, Zinkphosphat, Phthalocyaninblau, verschiedene Spinelle, Ruß, Graphit usw. Ganz besonders bevorzugt sind D) anorganische thermostabile Pigmente und/oder mindestens ein anorganischer Füllstoff, wie z.B. Eisenoxid, Glimmer und Titandioxid.

Komponente E) im Sinne der Erfindung umfaßt (Oligo)Silane und/oder deren (Teil)hydrolysate bzw. Gemische von verschiedenen (Oligo)Silanen und/oder deren (Teil)hydrolysate. Sie können in Form ihrer wäßrigen Lösungen und/oder Emulsionen oder Dispersionen vorliegen. Ganz besonders bevorzugt sind Lösungen der Komponente E) in Wasser. Als Komponente E) werden Aminogruppen-, Epoxy- und/oder Hydroxylgruppen enthaltende Silane, wie 3-Aminopropyltrisalkoxysilan, Epoxypropyltrisalkoxysilan, oder 3-Hydroxypropyltrisalkoxysilan verwendet.

Als Komponente F) kommen vorzugsweise die Katalysatoren in Frage, die Kondensationsreaktionen beschleunigen. Besonders bevorzugt sind Katalysatoren für die Reaktion von Hydroxylgruppen in Silanolen bzw. für die Reaktion von Silanolen mit Alkoxy-Silangruppen, wie z.B. metallorganische Verbindungen des Zinns. Typische Beispiele für die Komponente F sind Dibutylzinndilaurat oder Dibutylzinndioctoat.

Die Komponente G) kann ebenfalls jeder Zusatzstoff, der zur Herstellung von Lacken und Farben bekannt ist, sein, wie z.B. Lackadditive, wie Dispergier-, Verlauf-, Verdickungs-, Entschäumungs- und andere Hilfsmittel, Fungizide, Bakterizide, Stabilisatoren, Inhibitoren sowie Katalysatoren. G) kann aber auch ein Polymer oder ein Gemisch aus mehreren Polymeren sein, wie beispielsweise Cellulose, Polyether, Polyacrylate, Polyurethane, Weichmacher sowie verschiedene anorganische Harze.

Die erfindungsgemäßen Beschichtungsmischungen können als Komponente G) auch organische, metallorganische und/oder anorganische Korrosionsinhibitoren enthalten, wie z.B. Phosphorsäurederivate, diverse Amine, substituierte Benzoltriazole, Nitrosophthalsäuresalze, Talmin, Zinksalze organischer Stickstoffsäsuren, wie z.B. Alcophor®827 der Firma Henkel), substituierte Phenole oder ähnliches oder auch Netzmittel.

Gegenstand der vorliegenden Erfindung sind zudem Beschichtungsmischungen, erhältlich durch:
- Vorlegen von 2 bis 30 Gew.-%, bevorzugt 2 bis 20 Gew.-%, besonders bevorzugt 2 bis 15 Gew.-%, ganz besonders bevorzugt 5 bis 10 Gew.-%, mindestens einer Komponente B) als wäßrige Dispersion,
- Einrühren von 0 bis 5 Gew.-%, bevorzugt 0.01 bis 0.5 Gew.-%, besonders bevorzugt 0.1 bis 0.3 Gew.-% Netzmittel (Komponente G), 0 bis 40 Gew.-%, bevorzugt 1 bis 40 Gew.-%, besonders bevorzugt 1 bis 30 Gew.-%, ganz besonders bevorzugt 3 bis 20 Gew.-%, Komponente D) 5 bis 50 Gew.-%, bevorzugt 20 bis 40 Gew.-%, besonders bevorzugt 20 bis 35 Gew.-%, ganz besonders bevorzugt 20 bis 30 Gew.-% mindestens einer Komponente C),
- anschließende Zugabe von 0.1 bis 10 Gew.-% bevorzugt 0.5 bis 10 Gew.-%, besonders bevorzugt 1 bis 10 Gew.-% ganz besonders bevorzugt 1 bis 3 Gew.-% mindestens eines reaktionsfähigen (Oligo)siloxans (Komponente E) und gegebenenfalls weiteren Komponenten G) unter Rühren und
- Zugabe von 20 bis 40 Gew.-%, vorzugsweise 20 bis 35 Gew.-%, besonders bevorzugt 20 bis 30 Gew.-% mindestens einer Komponente A) und 0 bis 1 Gew.-%, vorzugsweise 0.01 bis 0.5 Gew.-%, besonders bevorzugt 0,01 bis 0.3 Gew.-% der Komponente F) sowie gegebenenfalls weiteren Komponenten G), wobei die Summe aller Komponenten G) 0 bis 5 Gew.-% beträgt, unter Rühren.

Gegenstand der vorliegenden Erfindung ist zudem ein Verfahren zur Herstellung der erfindungsgemäßen Beschichtungsmischungen, wonach in den erfindungsgemäßen Mengen
- die Komponente B) als wäßrige Dispersion vorgelegt wird,
- gegebenenfalls Netzmittel als Komponente G), gegebenenfalls nicht reaktive anorganische Pigmente, Füllstoffe und mindestens eine Komponente C) in die wäßrige Dispersion aus Komponente B) eingerührt werden und anschließend vorzugsweise 5 bis 60 Minuten verrührt werden,
- Komponente E) und gegebenenfalls weitere Komponenten G) unter Rühren zugegeben werden und anschließend mindestens eine Komponente A) und gegebenenfalls Komponente F) sowie gegebenenfalls weitere Komponenten G), wobei die Summe aller Komponenten G) 0 bis 5 Gew.-% beträgt, unter Rühren zudosiert werden.

Besonders bevorzugt werden die Beschichtungsmischungen nach dem erfindungsgemäßen Verfahren hergestellt. Dieses Verfahren verbessert sowohl die Eigenschaften der Beschichtungen als auch auf die Qualität der Lacke/Farben, aus denen die erfindungsgemäßen Beschichtungen hergestellt werden.

In einer besonders bevorzugten Ausführungsform der vorliegenden Erfindung wird in den erfindungsgemäßen Mengen
1) wäßriges Kieselsol als Komponente B) vorgelegt, weiterhin werden
2) in der nachfolgenden Reihenfolge Netzmittel (Komponente G)), nicht reaktive anorganische Pigmente (Komponente D)) und Komponente C) unter Rühren zugegeben und anschließend 5 bis 60 min., bevorzugt 10 bis 30 min. intensiv dispergiert,
3) anschließend wird reaktionsfähiges (Oligo)silan aus 3-Aminopropyltrisethoxisilan (Komponente E)) und gegebenenfalls weitere Komponenten G) unter Rühren zugegeben und 5 bis 60 min., bevorzugt 10 bis 30 min. dispergiert und
4) schließlich Komponente A) und gegebenenfalls Katalysator (Komponente F)) und gegebenenfalls weitere Komponenten G), wobei die Summe aller Komponenten G) 0 bis 5 Gew.-% beträgt, zugegeben und 5 bis 60 min., bevorzugt 10 bis 30 min. gerührt.

Zur Herstellung der Dispersionen aus Komponenten A) bis F) werden die zu Herstellung von Lacken angewandten Methoden, wie Kugelmühlen und andere intensive Mischverfahren bevorzugt. Der Einsatz verschiedener Hilfsstoffe, insbesondere Dispergiermittel, wie Polyacrylsäurederivate, Polyphosphate, Phosphonocarbonsäurederivate ist bei der Herstellung dieser Beschichtungsmischungen bevorzugt. Zur Stabilisierung der erfindungsgemäßen Beschichtungssysteme und deren Komponenten und zum Schutz vor Sedimentation können verschiedene organische und anorganische Verbindungen, wie beispielsweise Bentonite, Cellulosen, Polyacrylate oder Polyurethanverdicker, eingesetzt werden.

Die Dispersionen aus den erfindungsgemäßen Mischungen enthalten 20 - 90 Gew.-%, bevorzugt 40 - 80 Gew.-%, besonders bevorzugt 50 - 70 Gew.-% Feststoff. Die wäßrige Phase kann gegebenenfalls organische Lösemittel enthalten.

Gegenstand der vorliegenden Erfindung ist auch ein Verfahren zur Herstellung von Beschichtungen aus den erfindungsgemäßen Beschichtungsmischungen, wobei die Beschichtungsmischungen auf das zu beschichtende Material aufgebracht, gegebenenfalls bei Raumtemperatur vorgetrocknet und anschließend 1 bis 120 Minuten Temperaturen von 150 bis 750°C, vorzugsweise 150 bis 700°C ausgesetzt werden. Vorzugsweise werden die Beschichtungsmischungen in Form einer wäßrigen Dispersion eingesetzt.

Als zu beschichtende Materialien können nahezu alle wärmebeständigen Stoffe eingesetzt werden, wie beispielsweise Stahl, Aluminium und auch andere Metalle und deren Legierungen, emaillierte Materialien sowie metallisch beschichtete Stähle. Diese Materialien können je nach Art und Anwendungszweck vorbehandelt oder unvorbehandelt eingesetzt werden. Eine etwaige Vorbehandlung kann nach allen bekannten Verfahren, wie beispielsweise der Strahlbehandlung, durchgeführt werden.

Das Aufbringen der erfindungsgemäßen Beschichtungsmischungen auf eine feste Unterlage erfolgt bevorzugt nach der Spritz-, Tauch-, Rollen- und Streichtechnik. Je nach Anforderungen können auf diese Weise Beschichtungen mit Schichtdicken von 5 - 300 µm, bevorzugt 10 - 150 µm, besonders bevorzugt 15 - 75 µm, hergestellt werden.

Die aufgetragenen Beschichtungsmischungen können auch bei höherer Temperatur vorgetrocknet werden. Die bei Raumtemperatur vorgetrockneten Beschichtungsmischungen besitzen als Beschichtung auf der festen Unterlage bereits ausreichende mechanische Festigkeit, um transportiert, verformt und/oder anders gehandhabt zu werden. Die endgültigen anwendungstechnischen Eigenschaften werden jedoch erst nach thermischer Behandlung erreicht. Dabei kann entweder eine kurzzeitige Behandlung bei höherer Temperatur oder aber sinngemäß eine längere Behandlung bei tiefer Temperatur erfolgen. Der bevorzugte Temperaturbereich liegt zwischen 150 und 700°C, bevorzugt zwischen 200 und 600°C. Die Dauer der thermischen Behandlung kann zwischen 1 - 120 min, bevorzugt 5 - 60 min. betragen.

Gegenstand der vorliegenden Erfindung ist zudem die Verwendung der erfindungsgemäßen Beschichtungsmischungen zur wärmebeständigen Beschichtung von Öfen, Schalldämpfern, Industrieanlagen und wärmebelasteten Gegenständen beliebiger Art. Diese wärmebeständigen Beschichtungen stellen je nach vorheriger thermischer Behandlung weiche bis sehr harte Schichten dar und unterscheiden sich in ihren Eigenschaften grundlegend von denen der eingesetzten Rohstoffe, da diese so gewählt wurden, daß sie je nach Temperaturbereich in unterschiedlichem Maße miteinander reagieren können. Das Eigenschaftsprofil der hergestellten Beschichtungen ist sehr stark von der gewählten Temperatur abhängig. Es ist daher möglich, über die Temperatur für jeden Anwendungsbereich maßgeschneiderte Beschichtungen herzustellen.

Die erfindungsgemäßen Beschichtungen zeichnen sich vor allem durch eine hohe Biege-, Temperatur- und Temperaturdifferenzbeständigkeit sowie Beständigkeit gegen Korrosion aus, wie die nachfolgenden Beispiele zeigen.

### Ausführungsbeispiele

Folgende Substanzen werden in den Beispielen eingesetzt:
**I) als Polysiloxane:**
   Ia) 47%ige wäßrige Emulsion eines hydroxyfunktionellen Methylsiliconharzes der mittleren Zusammensetzung T₂₁₀D₂₃M₄ mit einem mittleren Molekulargewicht von ca. 12.000
**II) als reaktive anorganische Füllstoffe:**
   IIa) 30%ige wäßrige kolloide Kieselsäuresuspension mit einer BET-Oberfläche von 100 m²/g und einem pH-Wert von 10
**III) als Email:**
   IIIa) VP-AI 61-1167 M: Emailfritte der Firma Email Brügge
   IIIb) AT 6115®: Emailfritte der Firma Email Brügge
**IV) als Pigmente:**
   IVa) Bayferrox 303T®: Eisenoxidschwarz der Firma Bayer AG
   IVb) Echtschwarz®: Spinellschwarz der Firma Bayer AG
**V) als (Oligo)silan:**
   Va) Aminopropyltrisethoxisilan, 20%ig in Wasser
**VI) als Katalysator:**
   VIa) 10%ige wäßrige Emulsion von Dibutylzinndilaurat
**VII) als Verflüssiger:**
   VIIa) Bayhibit S®: Natriumsalz einer trifunktionellen Phosphoncarbonsäure der Firma Bayer AG

### Vergleichsbeispiel 1

Vorschrift zur Herstellung des Beschichtungsmaterials (Mengenangabe s. Tabelle 1, Prüfergebnisse, s. Tabelle 2):

Wasser wird vorgelegt und unter Rühren die Komponenten IIIb, IVa und IVb zugegeben und mit dem Dissolver bei ca. 1000 upm gerührt. Anschließend wird die Komponente VII zugesetzt und weitere 60 Minuten bei 1800 upm gerührt. Diese wäßrige Slurry wird dann den vorgemischten Komponenten I und IIa zugefügt. Anschließend wird die Mischung 10 Minuten bei 1800 upm gerührt.

### Beispiel 1a (erfindungsgemäß)

Herstellverfahren wie Vergleichsbeispiel 1, jedoch mit der in Tabelle 1 angegebenen Zusammensetzung, Prüfergebnisse, siehe Tabelle 2):

### Beispiele 2a bis 2g

Allgemeine Vorschrift zur Herstellung des erfindungsgemäßen Beschichtungsmaterials (Mengenangaben s. Tabelle 1, Prüfergebnisse siehe Tabelle 2):
1) die Komponente IIa wird vorgelegt, weiterhin werden
2) in der nachfolgenden Reihenfolge Komponente VII, die Komponenten IV und die Komponente III unter Rühren zugegeben und anschließend 20 Minuten intensiv bei ca. 3000 upm dispergiert,
3) anschließend wird die Komponente IIb unter Rühren zugegeben und 20 Minuten dispergiert,
4) schließlich werden Komponente I und Komponente VI zugegeben und weitere 20 Minuten gerührt.

**Tabelle 1:**

| Einwaage der Komponenten in Gewichtsanteilen und in Klammern befinden sich jeweils die Angaben in Gew.-%, bezogen auf Trockensubstanz | | | | | | | | | |
|---|---|---|---|---|---|---|---|---|---|
| Bsp.-Nr. | 1* | 1a | 2a | 2b | 2c | 2d | 2e | 2f | 2g |
| Komponenten | | | | | | | | | |
| Ia | 56.30 (26,46) | 53,40 (25,10) | 53.40 (25,10) | 42.55 (20,00) | 53.40 (25,10) | 53.40 (25,10) | 42.55 (20,00) | 64.89 (30,50) | 53.40 (25,10) |
| IIa | 27.00 (8,10) | 35,33 (10,60) | 35.33 (10,60) | 52.33 (15,70) | 35.33 (10,60) | 35.33 (10,60) | 29.33 (8,8) | 17.33 (5,2) | 35.33 (10,60) |
| IIIa | | | | | | | | | 15.34 (15,34) |
| IIIb | 32.50 (32,50) | 30,68 (30,68) | 30.68 (30,68) | 30.68 (30,68) | 40.00 (40,00) | 21.00 (21,00) | 30.68 (30,68) | 30.68 (30,68) | 15.34 (15,34) |
| IVa | 16.25 (16,25) | 15,30 (15,30) | 15.30 (15,30) | 15.30 (15,30) | 11.14 (11,1) | 20.14 (20,14) | 15.30 (15,30) | 15.30 (15,30) | 15.30 (15,30) |
| IVb | 16.25 (16,25) | 15,30 (15,30) | 15.30 (15,30) | 15.30 (15,30) | 11.14 (11,14) | 20.14 (20,14) | 15.30 (15,30) | 15.30 (15.30) | 15.30 (15,30) |
| V | | 11,50 (2,30) | 11.50 (2.30) | 11.50 (2,30) | 11.50 (2,30) | 11.50 (2,30) | 47.50 (9,50) | 11.50 (2,30) | 11.50 (2,30) |
| Vla | | 0,20 (0,02) | 0.20 (0,02) | 0.20 (0,02) | 0.20 (0,02) | 0.20 (0,02) | 0.20 (0,02) | 0.20 (0,02) | 0.20 (0.02) |
| VIIa | 0.40 (0,40) | 0,40 (0,40) | 0.40 (0,40) | 0.40 (0,40) | 0.40 (0,40) | 0.40 (0,40) | 0.40 (0,40) | 0.40 (0,40) | 0.40 (0,40) |
| Wasser | 43.60 | 7,64 | 7.64 | | 7.64 | 7.64 | | 15.00 | 7.64 |

| | | | | | | | | | |
|---|---|---|---|---|---|---|---|---|---|
| *Vergleichsbeispiel | | | | | | | | | |

**Tabelle 2:**

| Prüfergebnisse | | | | | | | | | |
|---|---|---|---|---|---|---|---|---|---|
| **Beispiele** | 1 Vergl. | 1a | 2a | 2b | 2c | 2d | 2e | 2f | 2g |
| Prüfungen | | | | | | | | | |
| **Trocknung bei RT / min.** | | | | | | | | | |
| -staubfrei | 15 | 15 | 10 | 10 | 15 | 10 | 10 | 15 | 10 |
| -klebfrei | 30 | 30 | 25 | 20 | 25 | 25 | 20 | 30 | 25 |

| **Temperaturbelastung** | | | | | | | | | |
|---|---|---|---|---|---|---|---|---|---|
| -1 h / 200°C | 0 | 0 | 0 | 0 | 0 | 0 | 0 | 0 | 0 |
| -1 h / 400°C | 0 | 0 | 0 | 0 | 0 | 0 | 0 | 0 | 0 |
| -1 h / 600°C | 0 | 0 | 0 | 0 | 0 | 0 | 0 | 0 | 0 |

| **Temperaturschocktest** | | | | | | | | | |
|---|---|---|---|---|---|---|---|---|---|
| 600°C/RT | 0 | 5 | 0 | 10 | 0 | 10 | 5 | 10 | 0 |

| **Salzsprühtest nach therm. Belastung** | | | | | | | | | |
|---|---|---|---|---|---|---|---|---|---|
| -RT | Ri3-4 | Ri2-3 | Ri0 | Ri3 | Ri3 | Ri2 | Ri3 | Ri0 | Ri0 |
| -1 h / 200°C | Ri3-4 | Ri3 | Ri0 | Ri3 | Ri3 | Ri1 | Ri3 | Ri1 | Ri0 |
| -1 h / 400°C | Ri1 | Ri1 | Ri0 | Ri1 | Ri1 | Ri0 | Ri1 | Ri1 | Ri0 |
| -1 h / 600°C | Ri0 | Ri0 | Ri0 | Ri0 | Ri0 | Ri0 | Ri0 | Ri0 | Ri0 |

### Meßgrößen und Testbedingungen zur Beurteilung wärmebeständiger Beschichtungen:

### Temperaturbelastung:

Meßgröße ist der abgeplatzte Filmteil in % nach thermischer Behandlung bei festgesetzter Zeit und Temperatur.

### Temperaturschocktest:

Die beschichtete und vorgetrocknete Platte wird 1 Stunde einer Temperatur von 600°C ausgesetzt und anschließend direkt in 20°C kaltem Wasser abgeschreckt. Meßgröße: Abgeplatzter Filmteil in %.

### Salzsprühtest:

Meßgröße: Rostwert nach DIN 53 210, dabei werden die Vergleichsbeispiele und andere Beschichtungen, die nach thermischer Belastung bereits Platzstellen zeigten, nicht geprüft. Die Meßwerte bedeuten dabei:

| Abkürzung | gerostete Fläche in % |
|---|---|
| Ri0 = | 0 |
| Ri1 = | 0,05 |
| Ri2 = | 0,5 |
| Ri3 = | 1 |
| Ri4 = | 8 |

## Patentansprüche

1. Beschichtungsmischungen, enthaltend im wasserfreien Zustand
A) 20 bis 40 Gew.% mindestens eines hydroxy- und/oder alkoxyfunktionellen Polysiloxanharzes, welches mit Wasser oder anderen Lösemitteln im Gemisch mit Wasser eine Emulsion ausbildet,
B) 2 bis 30 Gew.% mindestens eines reaktiven anorganischen oder mit organischen Resten modifizierten anorganischen Füllstoffs, welcher reaktive Gruppen enthält und mit sich selbst und/oder anderen Komponenten der erfindungsgemäßen Mischungen reagieren kann,
C) 5 - 50 Gew.% mindestens eines als Schmelze filmbildenden anorganischen Materials sowie
D) gegebenenfalls 0 bis 40 Gew.% eines Pigmentes und/oder unreaktiven Füllstoffes oder eines Gemisches aus mehreren unreaktiven Füllstoffen und/oder Pigmenten
E) 0,1 bis 10 Gew.% mindestens eines reaktionfähigen (Oligo)silans aus der Gruppe bestehend aus Aminogruppen-, Epoxy-, und/oder Hydroxylgruppen enthaltenden Silane oder deren (Teil)hydrolysate
F) gegebenenfalls 0 bis 1 Gew.% mindestens eines Katalysators sowie
G) gegebenenfalls 0 bis 5 Gew.% eines weiteren zur Herstellung von Lacken und Farben bekannten Zusatzstoffes oder eines Polymers oder eines organischen metallorganischen und/oder anorganischen Korrosionsinhibitors oder eines Gemisches aus mehreren dieser Zusatzstoffe;
wobei die Summe der Komponenten A ) bis G) 100% beträgt.

2. Beschichtungsmischungen nach Anspruch 1, **dadurch gekennzeichnet, daß** die reaktive anorganische Füllstoff B) kolloidale Kieselsäure in Form eines Kieselsols, Alkali-Wassergläser in wäßriger Lösung oder in fester Form, Alkalisilikonat, Aluminiumhydroxid oder ein Gemisch aus diesen Verbindungen ist.

3. Beschichtungsmischungen nach einem der Ansprüche 1 oder 2, **dadurch gekennzeichnet, daß** der reaktive anorganische Füllstoff B) kolloidales Kieselsol mit einem Feststoffgehalt von 5 bis 60 Gew.% und/oder ein Alkali-Wasserglas des Natriums, Kalium oder Lithiums mit einem Molverhältnis Me₂O : SiO₂ > 1 : 2 ist, mit Me = Na, K, Li.

4. Beschichtungsmischungen nach einem der Ansprüche 1 bis 3, **dadurch gekennzeichnet, daß** das als Schmelze filmbildende anorganische Material C) mindestens ein Email und/oder ein niedrigschmelzendes Glas ist.

5. Beschichtungsmischungen nach einem der Ansprüche 1 bis 4, **dadurch gekennzeichnet, daß** das reaktionsfähige (Oligo)silan E) ein (Teil)hydrolysat von 3-Aminopropyl-, 1,2-Epoxypropyl und/oder 3-Hydroxypropyltrisalkoxysilan ist.

6. Beschichtungsmischungen nach einem der Ansprüche 1 bis 5, **dadurch gekennzeichnet, daß** die weiteren Zusatzstoffe G) vorzugsweise Pigmente, Eisenoxide und/oder Glimmer sind.

7. Beschichtungsmischungen nach einem der Ansprüche 1 bis 6, **dadurch gekennzeichnet, daß** der Gehalt an F) mindestens 0,05 Gew.% beträgt.

8. Verfahren zur Herstellung von Beschichtungsmischungen nach Anspruch 1, **dadurch gekennzeichnet,daß**
- 2 bis 30 Gew.% mindestens einer Komponente B) als wäßrige Dispersion vorgelegt wird,
- 0 bis 5 Gew.% Netzmittel, 0 bis 40 Gew.% Komponente D) und 5 bis 50 Gew.% mindestens einer Komponente in die wäßrige Dispersion aus Komponente B) eingerührt werden,
- 0,1 bis 1 Gew.% mindestens einer Komponente E) und gegebenenfalls weitere Komponenten G) unter Rühren zugegeben werden und
- anschließend 20 bis 40 Gew.% mindestens einer Komponente A) und 0 bis 1 Gew% der Komponente F) und 0 bis 5 Gew% der Komponente G), wobei die Summe aller Komponenten G) 0 bis 5 Gew.% beträgt, unter Rühren dosiert werden.

9. Verfahren zur Herstellung von Beschichtungen aus Beschichtungsmischungen nach einem der Ansprüche 1 bis 8, **dadurch gekennzeichnet, daß** die Mischung auf das zu beschichtende Material aufgebracht, gegebenenfalls bei Raumtemperatur vorgetrocknet und anschließend 1 bis 120 Minuten Temperaturen von 150 bis 750 °C ausgesetzt werden.

10. Verwendung der Beschichtungsmischungen nach einem der Ansprüche 1 bis 9 zur wärmebeständigen Beschichtung von Öfen, Schalldämpfern, Industrieanlagen und wärmebelasteten Gegenständen beliebiger Art.

## Claims

1. Coating mixtures, containing in the anhydrous state
A) 20 to 40 wt.% of at least one hydroxy- and/or alkoxy-functional polysiloxane resin which forms an emulsion with water or other solvents in a blend with water,
B) 2 to 30 wt.% of at least one reactive inorganic filler or reactive inorganic filler modified with organic radicals, which contains reactive groups and can react with itself and/or with other components of the mixtures of the invention,
C) 5-50 wt.% of at least one inorganic material which is film-forming as a melt, and
D) optionally 0 to 40 wt.% of a pigment and/or unreactive filler or of a blend of two or more unreactive fillers and/or pigments,
E) 0.1 to 10 wt.% of at least one reactive (oligo)silane from the group consisting of amino-, epoxy- and/or hydroxyl-containing silanes which optionally contain alkoxy groups, or their (partial) hydrolysates,
F) optionally 0 to 1 wt.% of at least one catalyst, and
G) optionally 0 to 5 wt.% of a further additive known for the preparation of varnishes and paints or of a polymer or of an organic, organometallic and/or inorganic corrosion inhibitor or of a blend of two or more of these additives;
the sum of components A) to G) being 100%.

2. Coating mixtures according to Claim 1, **characterized in that** the reactive inorganic filler B) is colloidal silica in the form of a silica sol, alkali water glasses in aqueous solution or in solid form, alkali metal siliconate, aluminium hydroxide or a blend of these compounds.

3. Coating mixtures according to either of Claims 1 and 2, **characterized in that** the reactive inorganic filler B) is colloidal silica sol having a solids content of 5 to 60 wt.% and/or an alkali water glass of sodium, potassium or lithium with a molar ratio Me₂O:SiO₂ > 1:2, where Me = Na, K or Li.

4. Coating mixtures according to one of Claims 1 to 3, **characterized in that** the inorganic material C) which is film forming as a melt is at least one enamel and/or a low-melting glass.

5. Coating mixtures according to one of Claims 1 to 4, **characterized in that** the reactive (oligo)silane E) is a (partial) hydrolysate of 3-aminopropyl-, 1,2-epoxypropyl- and/or 3-hydroxypropyl-trisalkoxysilane.

6. Coating mixtures according to one of Claims 1 to 5, **characterized in that** the further additives G) are preferably pigments, iron oxides and/or mica.

7. Coating mixtures according to one of Claims 1 to 6, **characterized in that** the amount of F) is at least 0.05 wt.%.

8. Process for the manufacture of coating mixtures according to Claim 1, **characterized in that**
- 2 to 30 wt.% of at least one component B) is introduced initially as an aqueous dispersion,
- 0 to 5 wt.% of wetting agent, 0 to 40 wt.% of component D) and 5 to 50 wt.% of at least one component C) are stirred into the aqueous dispersion of component B),
- 0.1 to 1 wt.% of at least one component E) and optionally further components G) are added accompanied by stirring, and
- then 20 to 40 wt.% of at least one component A) and 0 to 1 wt.% of component F) and 0 to 5 wt.% of component G), wherein the sum of all components G) is 0 to 5 wt.%, are metered in accompanied by stirring.

9. Process for the manufacture of coatings from coating mixtures according to one of Claims 1 to 8, **characterized in that** the mixture is applied to the material to be coated, optionally predried at room temperature and then exposed to temperatures of 150 to 750°C for 1 to 120 minutes.

10. Use of the coating mixtures according to one of Claims 1 to 9 for heat-resistant coating of furnaces, silencers, industrial plants and objects of any kind which are exposed to heat.

## Revendications

1. Mélanges de revêtement contenant à l'état anhydre
A) de 20 à 40 % en poids d'au moins une résine polysiloxane hydroxy- et/ou alcoxy-fonctionnelle, laquelle forme une émulsion avec de l'eau ou d'autres solvants en mélange avec de l'eau,
B) de 2 à 30 % en poids d'au moins une charge réactive inorganique ou inorganique modifiée avec des restes organiques, laquelle contient des groupes réactifs et peut réagir avec elle-même et/ou d'autres constituants des mélanges selon l'invention,
C) 5-50 % en poids d'au moins un matériau inorganique formant un film en tant que masse en fusion ainsi que
D) éventuellement de 0 à 40 % en poids d'un pigment et/ou d'une charge non réactive ou d'un mélange de plusieurs charges et/ou pigments non réactifs,
E) de 0,1 à 10 % en poids d'au moins un (oligo)silane pouvant réagir choisi parmi des silanes contenant des groupes amino, des groupes époxy et/ou hydroxyle ou des hydrolysats partiels de ceux-ci,
F) éventuellement de 0 à 1 % en poids d'au moins un catalyseur ainsi que
G) éventuellement de 0 à 5 % en poids d'un autre additif connu pour la préparation de laques et de colorants ou d'un polymère ou d'un inhibiteur de corrosion organique métallo-organique et/ou inorganique ou d'un mélange de plusieurs de ces additifs ;
la somme des constituants A) à G) étant de 100 %.

2. Mélanges de revêtement selon la revendication 1, **caractérisés en ce que** la charge inorganique réactive B) est de l'acide silicique colloïdal dans la forme d'un sol de silice, d'un verre soluble d'alcali en solution aqueuse ou dans une forme solide, d'un siliconate d'alcali, d'un hydroxyde d'aluminium ou d'un mélange de ces composés.

3. Mélanges de revêtement selon l'une quelconque des revendications 1 ou 2, **caractérisés en ce que** la charge inorganique réactive B) est du sol de silice colloïdal avec une teneur en matière solide comprise entre 5 et 60 % en poids et/ou un verre soluble d'alcali du sodium, du potassium ou du lithium avec un rapport molaire Me₂O : SiO₂>1:2, avec Me=Na, K, Li.

4. Mélanges de revêtement selon l'une des revendications 1 à 3, **caractérisés en ce que** la matière inorganique formant un film en tant que masse en fusion C) est au moins un émail et/ou un verre de faible point de fusion.

5. Mélanges de revêtement selon l'une quelconque des revendications 1 à 4, **caractérisés en ce que** l'(oligo)silane pouvant réagir E) est un hydrolysat (partiel) de 3-aminopropyl-, 1,2-époxypropyl et/ou 3-hydroxypropyltrisalcoxysilane.

6. Mélanges de revêtement selon l'une quelconque des revendications 1 à 5, **caractérisés en ce que** les autres additifs G) sont de préférence des pigments, des oxydes de fer et/ou du mica.

7. Mélanges de revêtement selon l'une quelconque des revendications 1 à 6, **caractérisés en ce que** la teneur en F) est d'au moins 0,05 % en poids.

8. Procédé pour la préparation de mélanges de revêtement selon la revendication 1, **caractérisé en ce que**
- on dispose préalablement de 2 à 30 % en poids d'au moins un constituant B) comme dispersion aqueuse,
- on délaie de 0 à 5 % en poids d'un agent dispersant, de 0 à 40 % en poids de constituant D) et de 5 à 50 % en poids d'au moins un constituant dans la dispersion aqueuse constituée du constituant B),
- on ajoute de 0,1 à 1 % en poids d'au moins un constituant E) et éventuellement d'autres constituants G) en agitant et
- on dose ensuite en agitant de 20 à 40 % en poids d'au moins un constituant A) et de 0 à 1 % en poids du constituant F) et de 0 à 5 % en poids du constituant G), la somme de tous les constituants G) étant de 0 à 5 % en poids.

9. Procédé pour la préparation de revêtements constitués de mélanges de revêtement selon l'une quelconque des revendications 1 à 8, **caractérisé en ce que** le mélange est appliqué sur le matériau à revêtir, est éventuellement préalablement séché à température ambiante et est ensuite exposé pendant de 1 à 120 minutes à des températures de 150 à 750°C.

10. Utilisation des mélanges de revêtement selon l'une quelconque des revendications 1 à 9 pour un revêtement résistant à la chaleur de fours, de silencieux, d'installations industrielles et d'objets d'un type quelconque chargés thermiquement.
